# EUROPÄISCHE PATENTSCHRIFT

(11) **EP 1 434 964 B1**
(45) Veröffentlichungstag und Bekanntmachung des Hinweises auf die Patenterteilung: **10.12.2008**
(21) Anmeldenummer: 02801327.4
(22) Anmeldetag: 11.10.2002
(51) Int. Cl.: F16N 7/38, B60R 17/02, F01M 11/04

(54) **VERFAHREN ZUR SCHMIERUNG WENIGSTENS ZWEIER AGGREGATE EINES FAHRZEUGS MIT VERBRENNUNGSMOTOR**
METHOD FOR LUBRICATING AT LEAST TWO UNITS OF A VEHICLE EQUIPPED WITH AN INTERNAL COMBUSTION ENGINE
PROCEDE DE LUBRIFICATION D'AU MOINS DEUX GROUPES D'UN VEHICULE POURVU D'UN MOTEUR A COMBUSTION INTERNE

(30) Priorität: 11.10.2001 DE 10149992
(43) Veröffentlichungstag der Anmeldung: 07.07.2004
(73) Patentinhaber: Fuchs Petrolub AG, 68169 Mannheim (DE)
(72) Erfinder: LUTHER, Rolf, 67346 Speyer (DE); SEYFERT, Christian, 68167 Mannheim (DE)
(74) Vertreter: Schupfner, Georg
(86) Internationale Anmeldenummer: PCT/EP2002/011385
(87) Internationale Veröffentlichungsnummer: WO 2003/033957

(56) Entgegenhaltungen:
- DE-A- 4 140 667
- DE-A- 19 747 854
- US-A- 5 353 760

## Beschreibung

Die vorliegende Erfindung betrifft ein Verfahren zur Sch0mierung wenigstens zweier Aggregate eines Fahrzeugs mit Verbrennungsmotor, wobei jedes Aggregat eine oder mehrere Baugruppen umfasst, sowie ein entsprechendes Fahrzeug.

Bei herkömmlichen Fahrzeugen mit Verbrennungsmotor erfolgt die Schmierung der einzelnen Baugruppen, wie Getriebe, Motor, Hydraulik, Nassbremsen, Retarder und dergl., in voneinander getrennten, geschlossenen Schmierkreisläufen. Um eine optimale Schmierung der Schmierstellen der einzelnen Baugruppen zu gewährleisten, werden üblicherweise für die verschiedenen Schmierkreisläufe unterschiedliche Schmierstoffe auf Basis von Mineralölen oder teil- oder vollsynthetischer Flüssigkeiten eingesetzt, welche durch Zusatz spezieller Additive auf die jeweiligen schmierungstechnischen Anforderungen der einzelnen Baugruppen abgestimmt sind.

Zur Reduzierung der dadurch erforderlichen Anzahl an verschiedenen Schmierstoffen wurden in jüngster Zeit hauptsächlich für land- und forstwirtschaftliche Fahrzeuge geeignete Universalschmierstoffe, wie bspw. UTTO (Universal Tractor Transmission Oil) und STOU (Super Tractor Oil Universal), entwickelt, welche zur Schmierung mehrerer Baugruppen eingesetzt werden können. Während UTTO-Produkte zur Schmierung von Hydraulik, Getriebe und Nassbremsen verwendet werden können, sind STOU-Öle darüber hinaus auch zur Motorenschmierung geeignet. Durch den Einsatz solcher Universalschmierstoffe ist es möglich, mehrere Baugruppen, wie Hydraulik, Getriebe und Nassbremsen, aus einem gemeinsamen Schmierkreislauf mit Schmierstoff zu versorgen, welcher allerdings aufgrund der unterschiedlichen Anforderungen an die Schmierstoffreinheit baulich von dem Schmierkreislauf des Verbrennungsmotors getrennt ist. Derartige Fahrzeuge weisen demnach zwei getrennte, durch je einen isolierten Schmierkreislauf versorgte Aggregate auf, nämlich zum einen eine aus den Baugruppen Hydraulik, Getriebe und Nassbremsen bestehende Einheit und zum anderen den Verbrennungsmotor.

Allen diesen Systemen ist gemeinsam, dass in zeitlichen Abständen ein Ölwechsel an den einzelnen Schmierkreisläufen durchgeführt werden muss, weil während des Gebrauchs Wirkstoffe verbraucht werden, der Schmierstoff altert und mit Fremdstoffen verunreinigt wird. Beim Ölwechsel fallen jedoch schädliche Mengen Altöl an, die gemäß ihrem Abfallschlüssel kostenaufwendig entsorgt werden müssen. Zudem bedingt jeder Ölwechsel zwangsläufig eine Stillstandszeit des Fahrzeugs und verursacht Wartungskosten. Ferner sind bei Fahrzeugen mit mehreren Schmierkreisläufen oft unterschiedliche Ölwechselintervalle und das Befüllen mit unterschiedlichen Schmierstoffen erforderlich, wodurch die Logistik eines Ölwechsels erschwert wird.

Um zumindest auf einen Ölwechsel des Motorschmierkreislaufs verzichten zu können, wurde in jüngster Zeit vorgeschlagen, verbrauchten Schmierstoff kontinuierlich oder in Intervallen zusammen mit dem Treibstoff in dem Motor zu verbrennen. Bei dieser Art der Verlustschmierung macht man sich die Erkenntnis zunutze, dass man dem Treibstoff des Verbrennungsmotors ohne Beeinträchtigung der Motorleistung bis zu einigen Prozent Öl hinzumischen kann, welches dann bei der Kraftstoffverbrennung mitverbrannt wird.

Aus der DE 31 38 144 A1 ist ein Schmiermittel- und Treibstoffkreislauf insbesondere für die Dieselmotoren von Schwerlastfahrzeugen bekannt, bei welchem periodisch eine gegebene Schmierölmenge aus der Ölwanne des Motors extrahiert und dem Treibstofftank zugeführt wird, um die extrahierte Menge zusammen mit dem üblichen Dieseltreibstoff in dem Motor zu verbrennen. Außerdem ist eine automatisch arbeitende Anordnung zum Überwachen des Schmierölpegels vorgesehen, um diesen in der Ölwanne auf einem Soll-Pegel zu halten, so dass fortlaufend frisches Schmieröl in den Schmierkreislauf eingesetzt wird und zugleich eine periodische Reinigung des Altöls erfolgt. Es wird also lediglich ein üblicherweise in Intervallen erfolgender Motorölwechsel dadurch vermieden, dass kontinuierlich eine bestimmte Menge verbrauchten Motoröls durch eine entsprechende Menge frischen Motoröls ersetzt wird und das gebrauchte Motoröl mit dem Treibstoff verbrannt wird.

In der DE 30 19 877 A1 wird eine Vorrichtung zum Ölwechseln bei einer Brennkraftmaschine mit innerer Verbrennung und einem Schmiersystem mit Ölwanne sowie einem Brennstoffsystem mit Brennstofftank offenbart, bei welcher zum selbsttätigen Ölwechseln und Abführen von verbrauchtem Schmierstoff Ölfördermittel zum Überführen eines Teils des verbrauchten Maschinenöls aus dem Schmiersystem zum Brennstoffsystem vorgesehen sind, um den verbrauchten Ölanteil mit Brennstoff zu mischen. Darüber hinaus weist die Vorrichtung einen Öltank zum Speichern von Frischöl sowie Ölspeisemittel zum Zuführen von Frischöl aus dem Öltank zum Schmiersystem auf.

In der DE 30 06 903 A1 wird ein Verfahren zum Austauschen des im Ölsumpf einer Brennkraftmaschine gesammelten Schmieröls mit Hilfe einer separat zu steuernden Ölabsaugpumpe beschrieben, bei dem die Ölabsaugpumpe dosierte Ölmengen aus dem Ölsumpf der Brennkraftmaschine dem Kraftstoff der Brennkraftmaschine beimischt und der Brennkraftmaschine zumindest eine der abgesaugten Ölmenge entsprechende Frischölmenge zugeführt wird. Dabei sind die Ölmengen derart bemessen, dass unabhängig vom Ölverbrauch der Brennkraftmaschine innerhalb eines Ölwechselintervalls die vorgeschriebene Öleinfüllmenge abgesaugt wird. Die Steuereinrichtung ist so ausgelegt, dass nur bei einem Kraftstoffeinfüllvorgang, bei welchem sich die Füllstandsmessanzeige innerhalb kurzer Zeit aufwärts bewegt, die Ölabsaugpumpe zu arbeiten beginnt.

Schließlich ist aus der WO 99/23365 ein Verfahren zur Schmierung und gleichzeitigen Kraftstoffversorgung eines Verbrennungsmotors bekannt, bei dem dem Verbrennungsmotor während des Betriebes kontinuierlich ein additiviertes Pflanzenöl als Schmierstoff zugeführt und der gebrauchte Pflanzenöl-Schmierstoff zusammen mit einem Gemisch aus frischem Pflanzenöl sowie Dieselöl oder Rapsöl-Methylester im Motor dosiert als Motorenkraftstoff verbrannt wird.

Zwar ermöglichen diese Verfahren, auf einen Ölwechsel des Motorschmierkreislaufs verzichten zu können; allerdings müssen die Schmierstoffe für die übrigen Baugruppen, wie Getriebe, Hydraulik und dergl., mit den damit verbundenen Nachteilen in regelmäßigen Abständen ausgewechselt werden. Ein weiterer Nachteil dieser Verfahren ist der logistische Aufwand für die Versorgung der einzelnen, voneinander getrennten Schmierkreisläufe mit frischem Schmierstoff.

Aufgabe der vorliegenden Erfindung ist es daher, ein Verfahren zur Schmierung aller flüssigkeitsgeschmierten Aggregate, wenigstens jedoch zweier Aggregate eines Fahrzeugs mit Verbrennungsmotor zur Verfügung zu stellen, bei dem für die betreffenden Aggregate kein Ölwechsel erforderlich und dennoch die notwendige Schmierstoffqualität und -menge gewährleistet ist.

Diese Aufgabe wird bei einem Verfahren der eingangs genannten Art im Wesentlichen dadurch gelöst, dass man den Schmierstoff der Reihe nach durch wenigstens zwei Aggregate führt, indem dem ersten Aggregat aus einem Behälter frischer Schmierstoff zugeführt wird, aus der Ölwanne der einzelnen Aggregate zumindest ein Teil des verbrauchten Schmierstoff entnommen sowie dem jeweils in der Reihe nachfolgend angeordneten Aggregat zugeführt wird und der aus Ölwanne des letzten Aggregats entnommene Schmierstoff dem Verbrennungsmotor zur Verbrennung zugeführt wird.

Aufgrund der gemeinsamen Schmierung aller Aggregate mit einem Schmierstoff und abschließender thermischer Verwertung des Altöls im Motor ist bei dem erfindungsgemäßen Verfahren in den betreffenden Aggregaten kein Ölwechsel mehr erforderlich, so dass eine kostenaufwendige Entsorgung von Altöl entfällt und dadurch entstehende Stillstandszeiten des Fahrzeugs vermieden werden. Ferner muss nur noch dem ersten Aggregat der Reihe Frischöl zugeführt werden, so dass der logistische Aufwand erheblich reduziert wird. Abgesehen von den Wartungsvorteilen und der vereinfachten Logistik für den Betreiber wird bei diesem Verfahren sichergestellt, dass einerseits allen Aggregaten während des Betriebs fortlaufend frischer bzw. allenfalls leicht gealterter, für die Schmierung noch gut geeigneter Schmierstoff zugeführt wird und andererseits diesen Schmierkreisläufen fortwährend gealterter Schmierstoff entzogen wird, so dass in allen Schmierkreisläufen ständig ein für eine optimale Schmierung der Schmierstellen hinreichend frischer Schmierstoff zur Verfügung steht. Dabei kann die Auffrischrate, also der Anteil des den Aggregaten zugeführten frischen Schmierstoffs bzw. der den Schmierkreisläufen entnommenen verbrauchten Schmierstoffs bezogen auf den Kraftstoffverbrauch, an die Qualität des eingesetzten Schmierstoffs und an die Belastung, welcher der Schmierstoff in allen Aggregaten insgesamt ausgesetzt ist, angepasst werden.

Bevorzugt beträgt die Auffrischrate zwischen 0,1% und 2,5%.

Weiter vorzugsweise werden die Aggregate nach dem Grad ihrer Anforderung an die Reinheit des Schmierstoffs angeordnet. Dadurch wird erreicht, dass dem Aggregat mit der höchsten Reinheitsanforderung frischer Schmierstoff zugeführt wird, während der Schmierstoffvorrat der Aggregate mit geringeren Anforderungen mit teilweise gealterten Schmierstoff aus dem jeweils in der Reihe vorstehend angeordnetem Aggregat aufgefrischt wird, bevor der verbrauchte Schmierstoff am Ende der Nutzungskette dann in dem Verbrennungsmotor verbrannt wird. Bei einem Ackerschlepper mit zwei getrennten Schmierkreisläufen, namentlich einen für Hydraulik, Getriebe und Nassbremsen und einen für den Motor, wird beispielsweise frischer Schmierstoff bevorzugt zunächst dem aus Hydraulik, Getriebe und Nassbremsen bestehende Aggregat zugeführt, da in diesem die Reinheit des Schmierstoffs, ein konstanter Reibwert der Nassbremse und gute Verschleißschutzeigenschaften für eine optimale Schmierung entscheidend sind. Andererseits ist die thermische Belastung des Schmierstoffs im Vergleich zum Motor nicht sehr hoch, so dass noch keine nennenswerte Alterung des Schmierstoffs eintritt, bevor das Öl aus diesem Schmierkreislauf entnommen und für die Motorenschmierung eingesetzt wird. Im Motor wird der Schmierstoff dann sehr stark thermisch-oxidativ belastet und es kommt zu einem starken Eintrag von Verschmutzung, insbesondere Ruß.

Gemäß einer bevorzugten Ausführungsform der vorliegenden Erfindung ist vorgesehen, dem aus einem Aggregat entnommenen Schmierstoff vor der Zufuhr zu dem in der Reihe nachfolgendem Aggregat Additive zuzusetzen. Eine solche Additivzugabe ist vor allem zweckmäßig, nachdem der Schmierstoff ein reibwertkritisches Aggregat durchlaufen hat, in dem der Schmierstoff besonders beansprucht, etwa um bereits abgebaute Additive, wie Antioxidantien, Verschleißschutzadditive oder dergl., zu ergänzen. Obgleich grundsätzlich alle Aggregate eines Fahrzeugs mit einem Schmierstoff geschmiert werden können, sind die technischen Anforderungen an diese Universalöle sehr hoch, da die einzelnen Aggregate unterschiedliche Anforderungen an den Schmierstoff stellen. Einerseits wird für ein Hydrauliköl beispielsweise das Leistungsniveau eines HLP-Hydrauliköls gefordert, andererseits soll das Mobilgetriebe mit einem Schmierstoff nach GL-4 oder dergl. versorgt werden. Neben diesen Anforderungen an Alterungsstabilität, Verschleißschutz, Viskositäts-Temperatur-Verhalten Luftabscheidevermögen und Korrosionsschutz ergeben sich durch Nassbremsen und Synchronisationen sowie automatische Getriebe zusätzlich sehr spezielle Anforderungen bezüglich der Reibwerte. Durch die erfindungsgemäße Zugabe von Additiven, kann der durch alle Aggregate geführte Schmierstoff auf die Anforderungen des nächsten Aggregats hin optimiert werden. Beispielsweise sind Dispergatoren und Detergenzien für das Sauberhalten des Verbrennungsmotors wesentlich, im Getriebe- und Hydraulikkreis hingegen nicht nötig. So ist es denkbar, einem UTTO-ÖI nach dem Einsatz im gemeinsamen Getriebe- und Hydrauliksumpf eines Traktors durch Zugabe an Dispergatoren, Detergenzien sowie weiteren Additiven, insbesondere solcher zum Schutz des Motors vor dem Eintrag saurer Verbrennungsgase und zum Schutz vor Lack-, Schlamm- und Ablagerungsbildung, für den Einsatz in dem Motorenschmierkreislauf zu optimieren.

Vorzugsweise erfolgt die Zugabe der Additive über eine automatische Vorrichtung, Dosierpumpe oder dergl. direkt in die Ölwanne des Aggregats oder in die zu dem Aggregat führende Ölleitung.

Um erhöhte Emissionen nach dem Verbrennen des Schmierstoffs in dem Motor zu vermeiden, werden für die Schmierung der Aggregate bevorzugt zur Mitverbrennung im Motor geeignete, ggf. additivierte Schmierstoffe, insbesondere asche- und schwermetallfreie, schwefel- und phosphorarme Formulierungen, eingesetzt. Zu diesem Zweck haben sich insbesondere Schmierstoffe auf Basis von Pflanzenölen als geeignet erwiesen, wobei der im Vergleich zu Mineralölen geringeren Alterungsstabilität dieser Pflanzenschmierstoffe durch eine Erhöhung der Auffrischrate Rechnung getragen werden kann.

Um den verbrauchten Schmierstoff aus dem in der Reihe letzten Aggregat zu entsorgen, kann dieser zusammen mit dem Kraftstoff in dem Motor verbrannt werden. Dies hat den Vorteil, dass der Schmierstoff auch als Brennstoff genutzt wird. Zur Vermischung des verbrauchten Schmierstoffs mit dem Kraftstoff, kann dieser bspw. der Kraftstoffleitung zugeführt werden, und zwar vorzugsweise vor dem Kraftstofffilter, um etwaige Verschmutzungen des verbrauchten Schmierstoffs zurückzuhalten.

Alternativ dazu kann die Entsorgung kleiner Mengen an Altöl auch mittels direkter Einspritzung in den heißen Auslasstrakt des Verbrennungsmotors bewerkstelligt werden. Dort kommt es bei Temperaturen von mehr als 500°C zu einer Selbstentzündung, so dass das Altöl mit den enthaltenen Verunreinigungen verbrennt, ohne dass eventuelle störende Additive, Partikel oder dergl. zu Problemen im Motor führen können.

Vorzugsweise erfolgt die Altölverbrennung proportional zum Kraftstoffverbrauch, um die Fahrzeugemissionen konstant zu halten. Alternativ dazu kann vorgesehen sein, eine Mitverbrennung nur bei bestimmten Motorzuständen, beispielsweise nur bei Voll- oder Teillast von mehr als 70%, vorzunehmen oder die Auffrischrate des Schmierstoffs in allen Aggregaten in Abhängigkeit vom Signal eines Ölzustandssensors zu regeln. Beispielsweise kann für ein mit einem auf Rapsöl basierendem Schmierstoff geschmierten Fahrzeug die Viskosität als Kriterium für den Ölzustand dienen. Bei dieser Variante wird das Auffrischverfahren dann beim Übersteigen eines bestimmten Grenzwertes der Viskosität aktiviert, indem ein Teil des gebrauchten Öls aus dem jeweiligen Aggregat entnommen und durch frischeres Öl ersetzt. Für andere Schmierstoffe können selbstverständlich auch ein oder mehrere andere Schmierstoffparameter zur Regelung der Auffrischrate herangezogen werden.

In Weiterbildung des Erfindungsgedankens wird vorgeschlagen, in allen beteiligten Aggregaten, bspw. durch Kontrolle der Frischölzufuhr und Altölabfuhr, ständig eine im Wesentlichen konstante Schmierstoffmenge aufrechtzuerhalten, um so für eine gleichmäßige und zuverlässige Schmierung zu sorgen. Vorzugsweise wird der Schmierstoff durch die aus Vorratsbehälter für frischen Schmierstoff, ersten bis letzten zu schmierenden Aggregat und Treibstoffleitung bzw. Auslasstrakt des Motors bestehende Reihe mittels elektrischer, mechanischer oder hydraulischer Dosierpumpen gefördert, wobei besonders bevorzugt sich selbst entlüftende Pumpen eingesetzt werden. Erfindungsgemäß können die Pumpen sowohl einzeln angesteuert und geregelt werden als auch mechanisch oder elektronisch gekoppelt betrieben werden. Auch der Einsatz von elektrischen, mechanisch oder hydraulisch aktivierten Ventilen zur Steuerung des Ölflusses für die Auffrischung ist möglich.

Gemäß einer weiteren Ausführungsform der vorliegenden Erfindung ist allen oder einer Auswahl von Aggregaten eine Füllstandsmesseinrichtung zugeordnet, mithilfe derer die entsprechenden Dosierpumpen und/oder Ventile derart gesteuert werden, dass ein Absinken oder Überschreiten des Ölvolumens bzw. des Ölstands in den Aggregaten vermieden wird. Vorzugsweise regelt ein zentrales Steuergerät alle Pumpen, Ventile etc. und wertet dazu alle Signale der Füllstandsmesseinrichtung und ggf. weiterer Sensoren aus. Auch eine Einbindung aller Dosierpumpen, Ventile und der Regelungselektronik, die für das beschriebene Verfahren nötig sind, in die Bordelektronik des Fahrzeugs ist erfindungsgemäß möglich und erlaubt beispielsweise bei der Erstausstattung von Fahrzeugen eine Gesamtkonzeption des Schmierungssystems. Aus allen Aggregaten kann ständig Schmierstoff, d. h. die sich dort einstellende Mischung aus Frischöl und Altöl abgezogen werden, wobei der Abzug dieser Mischung vorzugsweise dort erfolgt, wo die Verschmutzung des Öls am höchsten ist. Auf diese Weise wird stets eine möglichst große Reinheit des Öls im jeweiligen Aggregat erreicht.

Das erfindungsgemäße Verfahren ist prinzipiell für alle Arten von Fahrzeugen geeignet, insbesondere für Land- und Wasserfahrzeuge. Lediglich beispielhaft und nicht einschränkend seien als Anwendungsbeispiele Traktoren, welche als zu schmierende Aggregate zum einen einen Motor und zum anderen eine aus den Baugruppen Hydraulik, Getriebe und Nassbremsen zusammengesetzte Einheit aufweisen, Baumaschinen mit den Aggregaten Motor, Getriebe und Hydraulik, Busse und Lkw's mit den Aggregaten Motor, Getriebe und Retarder, Pkw's, Schiffe und Boote mit getrenntem Getriebe- und Motorölkreislauf sowie Stationärmotoren mit gemeinsamem Kühl- und Motorölkreislauf genannt.

Ein besonderer Vorteil des erfindungsgemäßen Verfahrens liegt darin, dass die dazu erforderlichen baulichen Maßnahmen nicht nur bei der Herstellung von Neufahrzeugen berücksichtigt, sondern auch Gebrauchtfahrzeuge entsprechend nachgerüstet werden können.

Ein weiterer Gegenstand der vorliegenden Erfindung ist ein, insbesondere zur Durchführung des zuvor beschriebenen Verfahrens, geeignetes Fahrzeug mit Verbrennungsmotor.

Erfindungsgemäß weist das Fahrzeug mit Verbrennungsmotor einen Vorratsbehälter für frischen Schmierstoff, wenigstens zwei zu schmierende Aggregate, wobei jedes Aggregat eine oder mehrere Baugruppen umfasst und eine Ölwanne aufweist, einen Kraftstofftank und eine Kraftstoffleitung zur Zuführung von Kraftstoff in den Verbrennungsmotor auf, wobei wenigstens zwei der Aggregate derart in einer Reihe angeordnet sind, dass von dem Vorratsbehälter eine Zuleitung für frischen Schmierstoff zu dem in der Reihe ersten Aggregat führt, jeweils von dem in der Reihe vorstehend angeordneten Aggregat eine Schmierstoffleitung zu dem in der Reihe nachfolgend angeordneten Aggregat führt und von dem in der Reihe letzten Aggregat eine Ableitung für verbrauchten Schmierstoff in die Kraftstoffleitung oder den Auslasstrakt des Verbrennungsmotors führt.

Gemäß einer besonderen Ausführungsform der vorliegenden Erfindung weist das Fahrzeug zusätzlich wenigstens einen Additivtank auf, von dem eine Additivleitung in eine zu wenigstens einem Aggregat führende Schmierstoffleitung oder alternativ dazu direkt in die Ölwanne eines Aggregats führt. Durch die dosierte Zugabe von Additiven kann der durch alle Aggregate geführte Schmierstoff auf die Anforderungen der entsprechenden Aggregate hin optimiert werden.

In Weiterbildung des Erfindungsgedankens wird ferner vorgeschlagen, wenigstens eine der Schmierstoffleitungen mit einer Dosierpumpe auszustatten, über welche der Schmierstoff durch die entsprechende Schmierstoffleitung gefördert wird.

Ferner kann wenigstens eines der Aggregate eine automatische Füllstandsmessvorrichtung aufweisen, welche ggf. über ein Steuergerät mit der bzw. den Dosierpumpen und somit eine Steuerung der Auffrischrate und sowie des Schmierstofffüllstandes in den einzelnen Aggregaten ermöglicht.

Ebenfalls zur Steuerung der Auffrischrate kann zusätzlich oder alternativ zu der wenigstens einen automatische Füllstandsmessvorrichtung ein Ölzustandssensor vorgesehen sein, welcher ggf. über ein Steuergerät mit der bzw. den Dosierpumpen verbunden ist und somit eine Steuerung der Auffrischrate in Abhängigkeit der Schmierstoffqualität zulässt.

Gemäß einer besonderen Ausführungsform der vorliegenden Erfindung, weist das Fahrzeug eine zentrale Steuereinrichtung auf, welche die Messwerte des oder der Füllstandsmessvorrichtung und/oder Ölzustandssensoren auswertet und in ein Steuersignal umwandelt, durch welche die Dosierpumpe bzw. Dosierpumpen gesteuert werden. Darüber hinaus kann die Steuereinrichtung derart mit der Bordelektronik oder anderen Fahrzeugkomponenten verbunden sein, um dort zusätzliche Informationen, wie bspw. Last, Drehzahl, Öltemperaturen, aktuellen Treibstoffverbrauch, abzurufen und diese Informationen zur Steuerung der Dosierpumpe bzw. Dosierpumpen zu nutzen.

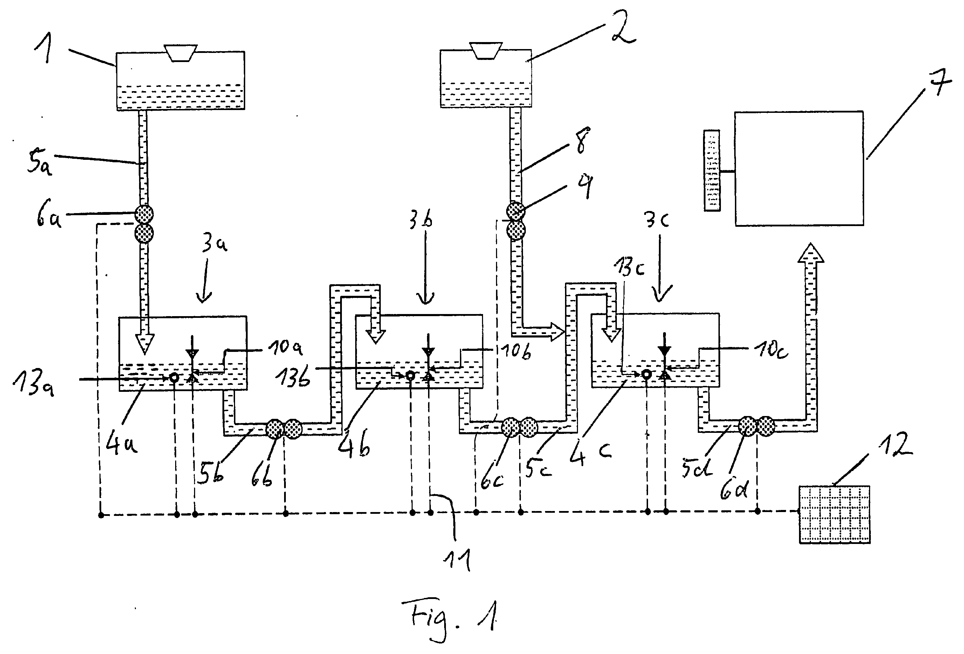

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschrieben und/oder bildlich dargestellten Merkmale für sich oder in beliebiger Kombination den Gegenstand der Erfindung, auch unabhängig von ihrer Zusammenfassung in einzelnen Ansprüchen oder deren Rückbeziehung.

In der einzigen Figur ist beispielhaft schematisch ein Fahrzeug zur Durchführung des Verfahrens dargestellt.

Das Fahrzeug weist einen Vorratsbehälter 1 für frischen Schmierstoff, einen Additivtank 2 sowie drei zu schmierende Aggregate 3a, 3b und 3c auf, wobei bspw. das in der Reihe zuerst angeordnete Aggregat 3a die Hydraulik, das zweite Aggregat 3b das Getriebe und das dritte Aggregate der Motor 3c ist. Alle drei Aggregate 3a, 3b und 3c werden durch Umlaufschmierung geschmiert, wobei sich der Schmierstoff nach Durchtritt der Schmierstellen in den jeweiligen Ölwannen 4a, 4b, 4c sammelt.

Von dem Vorratsbehälter 1 führt eine mit einer Dosierpumpe 6a ausgestattete Schmierstoffleitung 5a zu dem in der Reihe ersten Aggregat 3a, durch welche diesem kontinuierlich oder diskontinuierlich frischer Schmierstoff zugeführt werden kann. Ferner ist das erste Aggregat 4a mit dem zweiten Aggregat 4b sowie das zweite Aggregat 4b mit dem dritten Aggregat 4c jeweils über eine mit einer Dosierpumpe 6b, 6c ausgestattete Schmierstoffleitung 5b, 5c verbunden, durch welche Schmierstoff aus dem jeweils vorstehenden Aggregat 4a, 4b zu dem jeweils nachfolgenden Aggregat 4b, 4c gefördert werden kann. Von dem dritten Aggregat 4c schließlich führt eine mit einer Dosierpumpe 6d ausgestattete Schmierstoffableitung 5d entweder in den Auslasstrakt des Motors 7 oder in die Kraftstoffleitung (in der Zeichnung nicht dargestellt), um den abgezogenen verbrauchten Schmierstoff in dem Motor zu verbrennen. Während die Schmierstoffleitungen 5b, 5c und 5d mit ihrer Entnahmeseite in den Boden der jeweiligen Ölwannen 4a, 4b und 4c münden, so dass möglichst selektiv verbrauchter Schmierstoff aus den Aggregaten 3a, 3b und 3c abgezogen wird, münden die Zufuhrseiten der Schmierstoffleitungen 5a, 5b und 5c jeweils in einen davon räumlich getrennten Bereich, bspw. an einer oberhalb der Schmierstellen angeordneten Stelle, um eine Entnahme von frischem bzw. wenig gealterten Schmierstoff aus den Aggregaten 3a, 3b und 3c durch die Schmierstoffleitungen 5b, 5c und 5d möglichst zu verhindern. Des weiteren ist eine von dem Additivtank 2 zu der das zweite und dritte Aggregat 4b, 4c verbindenden Schmierstoffleitung 5c führende Additivleitung 8 vorgesehen, mittels deren Dosierpumpe 9 Additive über die Leitung 5c in das dritte Aggregat 3c gepumpt werden können.

In der Ölwanne bzw. dem Ölsumpf (4a, 4b und 4c) der Aggregate 3a, 3b und 3c ist jeweils eine Füllstandsmesseinrichtung 10a, 10b und 10c vorgesehen, welche über Steuerleitungen 11 mit einem zentralen Steuergerät 12 verbunden sind. Das Steuergerät 12 erhält über die Steuerleitungen 11 die Füllstandssignale aller Aggregate und kann die Dosierpumpen 6a, 6b, 6c sowie die Additivpumpe 9 ebenfalls über Steuerleitungen 11 so steuern, dass der Ölpegel und der Additivgehalt in den Aggregaten immer dem erforderlichen Stand entspricht. Sinkt beispielsweise in Aggregat 3b der Ölstand unter den definierten Mindestwert ab, erhalten die Dosierpumpen 6a und 6b solange ein entsprechendes Steuersignal zur Nachförderung von Schmierstoff, bis der Ölstand in Aggregat 4b wieder dem Sollstand entspricht. Dadurch wird eine manuelle Kontrolle des Ölstandes in den einzelnen Aggregaten überflüssig. Auch der in periodischem Abstand durchzuführende Ölwechsel aller Einzelaggregate, der bei konventioneller Schmierung erforderlich ist, entfällt, so dass nur noch den Inhalt der Frischölvorratsbehälter 1 und ggf. der Additivtank 2 regelmäßig ergänzt werden muss. Zu diesem Zweck kann eine (nicht dargestellte) Pegelüberwachung in den beiden Vorratsbehältern 1 und 2 vorgesehen sein.

Neben dem Füllstand wird über das Steuergerät 12 außerdem die Ölauffrischung der einzelnen Aggregate 3a, 3b und 3c geregelt, indem mit der Dosierpumpe 6d eine der Auffrischrate entsprechende Ölmenge aus Aggregat 3c entnommen und der Ölpegel in allen Aggregaten mit den Dosierpumpen 6a, 6b und 6c nachgeregelt wird sowie dem Aggregat 3c die entsprechende Menge Additiv über die Dosierpumpe 9 zugeführt wird. Im Allgemeinen werden den aggregaten 3a, 3b und 3c zur Auffrischung kontinuierlich oder quasi-kontinuierlich kleine Ölmengen entnommen, um Füllstandsschwankungen möglichst gering zu halten. Die Auffrischrate kann dabei zeitlich konstant sein oder in Abhängigkeit von verschiedenen Einflussgrößen geregelt werden. Beispielsweise kann die mitverbrannte Altölmenge proportional zum Kraftstoffverbrauch eingestellt werden, indem das Steuergerät 12 über eine (nicht dargestellte) Steuerleitung den aktuellen Kraftstoffverbrauch von der Einspritzpumpe oder der Kraftfahrzeugbordelektronik gemeldet bekommt. Auch eine Anpassung an den Lastzustand der Aggregate ist so möglich. Alternativ oder zusätzlich dazu können Ölzustandssensoren 13a, 13b und 13c vorgesehen sein, um den Schmierstoffzustand in den Aggregaten 3a, 3b und 3c zu überwachen. Auf diese Weise kann bei Überschreiten eines bestimmten Grenzwertes für den Ölzustand, beispielsweise bestimmt anhand eines Parameters, wie Viskosität, Dielektrizitätszahl oder dergl., gezielt ein Teil des Gebrauchtöls in allen Aggregaten 3a, 3b, 3c mittels der Dosierpumpen 6a, 6b, 6c, 6d und 8 ausgetauscht werden. Grundsätzlich sollte das Steuergerät das zur Mitverbrennung bestimmte Altöl dem Kraftstoff derart zudosieren, dass die Umweltbelastung minimiert wird. Dies geschieht vorzugsweise dadurch, dass der verbrauchte Schmierstoff dem Kraftstoff bis zu einem maximalen Mengenanteil, bei dem zulässige Emissionswerte noch nicht überschritten werden, kontinuierlich zudosiert wird. Zur Zwischenlagerung von ggf. kurzfristig auftretenden Überschuss an verbrauchten Schmierstoff, kann ein Puffertank vorgesehen sein.

### Bezugszeichenliste:

- 1: Vorratsbehälter für frischen Schmierstoff
- 2: Additivtank
- 3a - c: Aggregat
- 4a - c: Ölwanne
- 5a - d: Schmierstoffleitung
- 6a - d: Dosierpumpe der Schmierstoffleitung
- 7: Auslasstrakt des Motors
- 8: Additivleitung
- 9: Dosierpumpe für Additivzugabe
- 10a - c: Füllstandsmesseinrichtung
- 11: Steuerleitung
- 12: Steuergerät
- 13a - c: Ölzustandssensor

## Patentansprüche

1. Verfahren zur Schmierung wenigstens zweier Aggregate eines Fahrzeugs mit Verbrennungsmotor, wobei jedes Aggregat (3a, 3b, 3c) eine oder mehrere Baugruppen umfasst, **dadurch gekennzeichnet, dass** man Schmierstoff der Reihe nach durch die wenigstens zwei Aggregate (3a, 3b, 3c) führt, indem dem ersten Aggregat (3a) aus einem Behälter (1) frischer Schmierstoff zugeführt wird, aus der Ölwanne (4a, 4b, 4c) der einzelnen Aggregate zumindest ein Teil des verbrauchten Schmierstoffs entnommen sowie dem jeweils in der Reihe nachfolgend angeordneten Aggregat (3b, 3c) zugeführt wird und der aus Ölwanne (4c) des letzten Aggregats (3c) entnommene Schmierstoff dem Verbrennungsmotor zur Verbrennung zugeführt wird.

2. Verfahren nach Anspruch 1, **dadurch gekennzeichnet, dass** die Auffrischrate an Schmierstoff, bezogen auf den Kraftstoffverbrauch, 0,1% bis 2,5% beträgt.

3. Verfahren nach Anspruch 1 oder 2, **dadurch gekennzeichnet, dass** die Aggregate (3a, 3b, 3c) nach dem Grad ihrer Anforderung an die Reinheit des Schmierstoffs angeordnet werden.

4. Verfahren nach einem der Ansprüche 1 bis 3, **dadurch gekennzeichnet, dass** dem aus einem Aggregat (3a, 3b) entnommenem Schmierstoff vor der Zufuhr zu dem in der Reihe nachfolgendem Aggregat (3b, 3c) Additive zugesetzt werden.

5. Verfahren nach Anspruch 4, **dadurch gekennzeichnet, dass** die Additive direkt in die Ölwanne (4a, 4b, 4c) des Aggregats oder in die zu dem Aggregat (3b, 3c) führende Schmierstoffleitung (5b, 5c) zugegeben werden.

6. Verfahren nach einem der Ansprüche 1 bis 5, **dadurch gekennzeichnet, dass** als Schmierstoffe asche- und schwermetallfreie, schwefel- und phosphorarme Formulierungen auf Basis von Pflanzenölen eingesetzt werden.

7. Verfahren nach einem der Ansprüche 1 bis 6, **dadurch gekennzeichnet, dass** der aus Ölwanne (4a, 4b, 4c) des letzten Aggregats (3c) entnommene Schmierstoff zusammen mit aus einem Tank zugeleitetem Kraftstoff in dem Motor verbrannt wird.

8. Verfahren nach einem der Ansprüche 1 bis 6, **dadurch gekennzeichnet, dass** der aus Ölwanne (4a, 4b, 4c) des letzten Aggregats (3c) entnommene Schmierstoff zur Verbrennung in den Auslasstrakt des Motors (7) eingeleitet, bspw. eingedüst, wird.

9. Verfahren nach einem der Ansprüche 1 bis 8, **dadurch gekennzeichnet, dass** der aus dem letzten Aggregat (3c) entnommene Schmierstoff zumindest im Wesentlichen proportional zum Kraftstoffverbrauch in dem Motor verbrannt wird.

10. Verfahren nach einem der Ansprüche 1 bis 8, **dadurch gekennzeichnet, dass** der aus dem letzten Aggregat (3c) entnommene Schmierstoff nur bei Volllast oder Teillast von mehr als 70% des Motors in dem Motor verbrannt wird.

11. Verfahren nach einem der Ansprüche 1 bis 10, **dadurch gekennzeichnet, dass** in den beteiligten Aggregaten ständig eine im Wesentlichen konstante Schmierstoffmenge aufrechterhalten wird.

12. Verfahren nach einem der Ansprüche 1 bis 11, **dadurch gekennzeichnet, dass** der Schmierstoff durch die aus Vorratsbehälter für frischen Schmierstoff (1), ersten bis letztes zu schmierenden Aggregat (3a, 3b, 3c) und Treibstoffleitung bzw. dem Auslasstrakt des Motors (7) bestehende Reihe mittels elektrischer, mechanischer oder hydraulischer Dosierpumpen (6a, 6b, 6c, 6d) gefördert wird.

13. Verfahren nach einem der Ansprüche 1 bis 12, **dadurch gekennzeichnet, dass** die entsprechenden Dosierpumpen (6a, 6b, 6c, 6d) durch ein Steuergerät (12), welches Signale von Füllstandsmessvorrichtungen (10a, 10b, 10c) empfängt und auswertet, derart gesteuert werden, dass ein Absinken oder Überschreiten des Schmierstoffpegels in den Aggregaten vermieden wird.

14. Fahrzeug mit Verbrennungsmotor, insbesondere zur Durchführung eines Verfahrens nach einem der Ansprüche 1 bis 13, mit einem Vorratsbehälter (1) für frischen Schmierstoff, wenigstens zwei zu schmierenden Aggregaten (3a, 3b, 3c), wobei jedes Aggregat (3a, 3b, 3c) eine oder mehrere Baugruppen umfasst und eine Ölwanne (4a, 4b, 4c) aufweist, einem Kraftstofftank sowie mit einer Kraftstoffleitung zur Zufuhr von Kraftstoff in den Verbrennungsmotor, **dadurch gekennzeichnet, dass** wenigstens zwei der Aggregate (3a, 3b, 3c) derart in einer Reihe angeordnet sind, dass von dem Vorratsbehälter (1) eine Zuleitung für frischen Schmierstoff (5a) zu dem in der Reihe ersten Aggregat (3a) führt, jeweils von dem in der Reihe vorstehend angeordneten Aggregat (3a, 3b) eine Schmierstoffleitung (5b, 5c) zu dem in der Reihe nachfolgend angeordneten Aggregat (3b, 3c) führt und von dem in der Reihe letzten Aggregat (3c) eine Ableitung für verbrauchten Schmierstoff (6d) in die Kraftstoffleitung oder den Auslasstrakt (7) des Verbrennungsmotors führt.

15. Fahrzeug nach Anspruch 14, **dadurch gekennzeichnet, dass** wenigstens ein Additivtank (2) vorgesehen ist, von dem eine Additivleitung (8) in eine zu wenigstens einem Aggregat (3a, 3b, 3c) führende Schmierstoffleitung (5a, 5b, 5c) oder in die Ölwanne (4a, 4b, 4c) eines Aggregats (3a, 3b, 3c) führt.

16. Fahrzeug nach Anspruch 14 oder 15, **dadurch gekennzeichnet, dass** wenigstens eine der Schmierstoffleitungen (5a, 5b, 5c, 5d) mit einer Dosierpumpe (6a, 6b, 6c, 6d) ausgestattet ist.

17. Fahrzeug nach Anspruch 16, **dadurch gekennzeichnet, dass** wenigstens eines der Aggregate (3a, 3b, 3c) eine automatische Füllstandsmessvorrichtung (10a, 10b, 10c) aufweist, welche ggf. über ein Steuergerät (12) mit der bzw. den Dosierpumpen (6a, 6b, 6c, 6d, 8) verbunden ist.

18. Fahrzeug nach Anspruch 16 oder 17**, dadurch gekennzeichnet, dass** wenigstens eines der Aggregate (3a, 3b, 3c) einen Ölzustandssensor (13a, 13b, 13c) aufweist, welcher ggf. über ein Steuergerät (12) mit der bzw. den Dosierpumpen (6a, 6b, 6c, 6d, 8) verbunden ist.

19. Fahrzeug nach einem der Ansprüche 16 bis 18, **dadurch gekennzeichnet, dass** eine zentrale Steuereinrichtung (12) vorgesehen ist, welche die Messwerte des oder der Füllstandsmessvorrichtungen (10a, 10b, 10c) und/oder der Ölzustandssensoren (13a, 13b, 13c) auswertet und in ein Steuersignal umwandelt, durch welche die Dosierpumpe bzw. Dosierpumpen (6a, 6b, 6c, 6d, 8) gesteuert werden.

20. Fahrzeug nach Anspruch 19, **dadurch gekennzeichnet, dass** die Steuereinrichtung (12) derart ausgelegt ist, dass zusätzliche Informationen, wie Last, Drehzahl, Öltemperaturen, aktueller Treibstoffverbrauch, aus der Bordelektronik oder anderer Fahrzeugkomponenten abrufen und zur Steuerung der Dosierpumpe bzw. Dosierpumpen nutzen kann.

## Claims

1. A method for lubricating at least two units of a vehicle with an internal combustion engine, wherein each unit (3a, 3b, 3c) comprises one or a plurality of components, **characterised in that** lubricant is fed in order through at least two units (3a, 3b, 3c), fresh lubricant being fed to the first unit (3a) from a container (1), at least some of the consumed lubricant is extracted from the oil sump (4a, 4b, 4c) of the individual units, and is then fed to the next unit (3b, 3c) in order and the lubricant extracted from the oil sump (4c) of the last unit (3c) is fed to the internal combustion engine for combustion.

2. The method according to Claim 1, **characterised in that** the lubricant replenishment rate, related to the fuel consumption, is 0.1 % to 2.5%.

3. The method according to Claim 1 or 2, **characterised in that** the units (3a, 3b, 3c) are arranged according to their lubricant purity requirement.

4. The method according to one of Claims 1 to 3, **characterised in that** additives are added to the lubricant extracted from a unit (3a, 3b) before being fed to the unit (3b, 3c) that is next in order.

5. The method according to Claim 4, **characterised in that** the additives are added directly into the oil sump (4a, 4b, 4c) of the unit or into the lubricant line (5b, 5c) leading to the unit (3b, 3c).

6. The method according to one of Claims 1 to 5, **characterised in that** as lubricant ash- and heavy metal-free, low sulphur and low phosphorus formulations based on vegetable oils are used.

7. The method according to one of Claims 1 to 6, **characterised in that** the lubricant extracted from the oil sump (4a, 4b, 4c) of the last unit (3c) is burned in the engine together with fuel fed from a tank.

8. The method according to one of Claims 1 to 6, **characterised in that** the lubricant extracted from the oil sump (4a, 4b, 4c) of the last unit (3c) is introduced, e.g. injected, into the outlet duct of the engine (7) for combustion.

9. The method according to one of Claims 1 to 8, **characterised in that** the lubricant extracted from the last unit (3c) is burned in the engine at least essentially proportional to the fuel consumption.

10. The method according to one of Claims 1 to 8, **characterised in that** the lubricant extracted from the last unit (3c) is only burned in the engine at full load or at partial load of over 70% of the engine.

11. The method according to one of Claims 1 to 10, **characterised in that** an essentially constant lubricant amount is maintained continuously in the participating units.

12. The method according to one of Claims 1 to 11, **characterised in that** the lubricant is conveyed through the series, comprising the storage tank for fresh lubricant (1), the first to last unit to be lubricated (3a, 3b, 3c), fuel line and/or outlet duct of the engine (7) by means of electrical, mechanical or hydraulic proportioning pumps (6a, 6c, 6c, 6d).

13. The method according to one of Claims 1 to 12, **characterised in that** the corresponding proportioning pumps (6a, 6b, 6c, 6d) are controlled by a control unit (12), which receives and evaluates signals from filling level measuring devices (10a, 10b, 10c), so that a reduction or exceeding of the lubricant level in the units is avoided.

14. A vehicle with an internal combustion engine, in particular for carrying out a method according to one of Claims 1 to 13, with a storage container (1) for fresh lubricant, at least two units (3a, 3b, 3c) to be lubricated, wherein each unit (3a, 3b, 3c) comprises one or a plurality of components and has an oil sump (4a, 4b, 4c), with a fuel tank and with a fuel line for feeding fuel into the internal combustion engine, **characterised in that** at least two of the units (3a, 3b, 3c) are arranged in order so that a feed line for fresh lubricant (5a) leads from the storage container (1) to the first unit (3a) in order, a lubricant line (5b, 5c) leads from the preceding unit (3a, 3b) in order to the unit (3b, 3c) arranged next in order, and a discharge pipe for consumed lubricant (6d) leads from the last unit (3c) in order into the fuel line or outlet duct (7) of the internal combustion engine.

15. The vehicle according to Claim 14, **characterised in that** at least one additive tank (2) is provided from which an additive line (8) leads into a lubricant line (5a, 5b, 5c) leading to at least one unit (3a, 3b, 3c) or into the oil sump (4a, 4b, 4c) of a unit (3a, 3b, 3c).

16. The vehicle according to Claim 14 or 15, **characterised in that** at least one of the lubricant lines (5a, 5b, 5c, 5d) is equipped with a proportioning pump (6a, 6b, 6c, 6d).

17. The vehicle according to Claim 16, **characterised in that** at least one of the units (3a, 3b, 3c) has an automatic filling level measuring device (10a, 10b, 10c) which, if necessary, is connected by a control unit (12) to the proportioning pump or pumps (6a, 6b, 6c, 6d, 8).

18. The vehicle according to Claim 16 or 17, **characterised in that** at least one of the units (3a, 3b, 3c) has an oil condition sensor (13a, 13b, 13c) which optionally is connected via a control unit (12) to the proportioning pump or pumps (6a, 6b, 6c, 6d, 8).

19. The vehicle according to one of Claims 16 to 18, **characterised in that** a central control device (12) is provided which evaluates the measured values of the filling level device(s) (10a, 10b, 10c) and/or of the oil condition sensor(s) (13a, 13b, 13c), and converts them into control signals by means of which the proportioning pump(s) (6a, 6b, 6c, 6d, 8) is/are controlled.

20. The vehicle according to Claim 19, **characterised in that** the control device (12) is designed so that additional information, such as load, speed, oil temperatures, current fuel consumption, can be called off from the on-board electronics or other vehicle components and used for controlling the proportioning pump or pumps.

## Revendications

1. Procédé de lubrification d'au moins deux groupes d'un véhicule équipé d'un moteur à combustion interne, dans lequel chaque groupe (3a, 3b, 3c) comporte un ou plusieurs ensembles, **caractérisé en ce que** le lubrifiant est acheminé, dans l'ordre, à travers les au moins deux groupes (3a, 3b, 3c) en acheminant vers le premier groupe (3a) du lubrifiant frais à partir d'un réservoir (1), en prélevant dans le carter à huile (4a, 4b, 4c) des différents groupes au moins une partie du lubrifiant usagé et en l'acheminant au groupe (3b, 3c) respectif disposé après dans l'ordre et en acheminant le lubrifiant prélevé dans le carter à huile (4c) du dernier groupe (3c) vers le moteur à combustion interne pour la combustion.

2. Procédé selon la revendication 1, **caractérisé en ce que** le taux de régénération de lubrifiant est de 0,1 % à 2,5 % par rapport à la consommation de carburant.

3. Procédé selon la revendication 1 ou la revendication 2, **caractérisé en ce que** les groupes (3a, 3b, 3c) sont disposés en fonction du degré d'exigence de pureté du lubrifiant.

4. Procédé selon l'une quelconque des revendications 1 à 3, **caractérisé en ce que** des additifs sont ajoutés au lubrifiant prélevé dans un groupe (3a, 3b) avant d'être acheminé vers le groupe (3b, 3c) situé après dans l'ordre.

5. Procédé selon la revendication 4, **caractérisé en ce que** les additifs sont ajoutés directement dans le carter à huile (4a, 4b, 4c) du groupe ou dans la conduite de lubrifiant (5b, 5c) conduisant au groupe (3b, 3c).

6. Procédé selon l'une quelconque des revendications 1 à 5, **caractérisé en ce qu'**on utilise, comme lubrifiants, des formulations dépourvues de cendre et de métaux lourds, pauvres en soufre et en phosphore, à base d'huiles végétales.

7. Procédé selon l'une quelconque des revendications 1 à 6, **caractérisé en ce que** le lubrifiant prélevé dans le carter à huile (4a, 4b, 4c) du dernier groupe (3c) est brûlé dans le moteur en même temps que le carburant provenant du réservoir.

8. Procédé selon l'une quelconque des revendications 1 à 6, **caractérisé en ce que** le lubrifiant prélevé dans le carter à huile (4a, 4b, 4c) du dernier groupe (3c) est introduit, par exemple injecté, dans le circuit d'échappement du moteur (7) pour la combustion.

9. Procédé selon l'une quelconque des revendications 1 à 8, **caractérisé en ce que** le lubrifiant prélevé dans le dernier groupe (3c) est brûlé dans le moteur au moins pour l'essentiel proportionnellement à la consommation de carburant.

10. Procédé selon l'une quelconque des revendications 1 à 8, **caractérisé en ce que** le lubrifiant prélevé dans le dernier groupe (3c) n'est brûlé dans le moteur qu'à pleine charge ou à charge partielle supérieure à 70 % du moteur.

11. Procédé selon l'une quelconque des revendications 1 à 10, **caractérisé en ce qu'**une quantité de lubrifiant essentiellement constante est maintenue en permanence dans les groupes concernés.

12. Procédé selon l'une quelconque des revendications 1 à 11, **caractérisé en ce que** le lubrifiant est acheminé dans l'ordre constitué du réservoir pour le lubrifiant frais (1), des premier au dernier groupes (3a, 3b, 3c) à lubrifier et de la conduite de carburant respectivement du circuit d'échappement du moteur (7) au moyen de pompes doseuses électriques, mécaniques ou hydrauliques (6a, 6b, 6c, 6d).

13. Procédé selon l'une quelconque des revendications 1 à 12, **caractérisé en ce que** les pompes doseuses (6a, 6b, 6c, 6d) correspondantes sont commandées par un appareil de commande (12), qui reçoit et analyse des signaux de jauges de niveau (10a, 10b, 10c), de manière à éviter une baisse ou un dépassement du niveau de lubrifiant dans les groupes.

14. Véhicule équipé d'un moteur à combustion interne, en particulier pour la réalisation d'un procédé selon l'une quelconque des revendications 1 à 13, comportant un réservoir (1) pour le lubrifiant frais, au moins deux groupes (3a, 3b, 3c) à lubrifier, chaque groupe (3a, 3b, 3c) comprenant un ou plusieurs ensembles et présentant un carter à huile (4a, 4b, 4c), un réservoir de carburant ainsi qu'une conduite de carburant pour l'acheminement du carburant vers le moteur à combustion interne, **caractérisé en ce qu'**au moins deux des groupes (3a, 3b, 3c) sont disposés dans l'ordre de manière à ce qu'une conduite de lubrifiant frais (5a) conduise depuis le réservoir (1) vers le premier groupe (3a) dans l'ordre, à ce qu'une conduite de lubrifiant (5b, 5c) conduise depuis respectivement le groupe (3a, 3b) placé devant dans l'ordre vers le groupe (3b, 3c) placé après dans l'ordre et une conduite de dérivation pour le lubrifiant usagé (6d) conduise depuis le dernier groupe (3c) dans l'ordre vers la conduite de carburant ou le circuit d'échappement (7) du moteur à combustion interne.

15. Véhicule selon la revendication 14, **caractérisé en ce qu'**on prévoit au moins un réservoir à additifs (2) depuis lequel une conduite d'additifs (8) conduit dans une conduite de lubrifiant (5a, 5b, 5c) conduisant vers au moins un groupe (3a, 3b, 3c) ou vers le carter à huile (4a, 4b, 4c) d'un groupe (3a, 3b, 3c).

16. Véhicule selon la revendication 14 ou la revendication 15, **caractérisé en ce qu'**au moins l'une des conduites de lubrifiant (5a, 5b, 5c, 5d) est équipée d'une pompe doseuse (6a, 6b, 6c, 6d).

17. Véhicule selon la revendication 16, **caractérisé en ce qu'**au moins l'un des groupes (3a, 3b, 3c) présente une jauge de niveau automatique (10a, 10b, 10c) qui est reliée le cas échéant à la ou aux pompes doseuses (6a, 6b, 6c, 6d, 8) par l'intermédiaire d'un appareil de commande (12).

18. Véhicule selon la revendication 16 ou la revendication 17, **caractérisé en ce qu'**au moins l'un des groupes (3a, 3b, 3c) présente un capteur d'état de l'huile (13a, 13b, 13c) qui est relié le cas échéant à la ou aux pompes doseuses (6a, 6b, 6c, 6d, 8) par l'intermédiaire d'un appareil de commande (12).

19. Véhicule selon l'une quelconque des revendications 16 à 18, **caractérisé en ce qu'**on prévoit un dispositif de commande central (12) qui analyse les valeurs mesurées du ou des jauges de niveau (10a, 10b, 10c) et/ou des capteurs d'état de l'huile (13a, 13b, 13c) et qui les convertit en signal de commande qui commande la pompe doseuse ou les pompes doseuses (6a, 6b, 6c, 6d, 8).

20. Véhicule selon la revendication 19, **caractérisé en ce que** le dispositif de commande (12) est conçu de manière à pouvoir interroger des informations supplémentaires telles que la charge, le régime, la température de l'huile, la consommation de carburant du moment, se trouvant dans l'électronique de bord ou d'autres composants du véhicule et les utiliser pour commander la pompe doseuse ou les pompes doseuses.
